# EUROPÄISCHE PATENTANMELDUNG

(11) **EP 4 067 642 A1**
(43) Veröffentlichungstag der Anmeldung: **05.10.2022**
(21) Anmeldenummer: 22165175.5
(22) Anmeldetag: 29.03.2022
(51) Int. Cl.: F03D 1/06, F03D 15/00, F03D 80/00

(54) **EINE VORRICHTUNG ZUM ARRETIEREN EINER ROTORWELLE EINER WINDENERGIEANLAGE, EINE WINDENERGIEANLAGE UND EIN VERFAHREN ZUM HERSTELLEN EINER WINDENERGIEANLAGE**

(30) Priorität: 29.03.2021 DE 102021107906
(71) Anmelder: Enovation GmbH, 18230 Ostseebad Rerik (DE)
(72) Erfinder: SCHMIDT, Hendrik, 18057 Rostock (DE); SPRINGER, Alexander, 18057 Rostock (DE); MAAß, Tony, 18236 Kröpelin, OT Hanshagen (DE); AHRENS, Robin, 18057 Rostock (DE); BOCKHOLT, Stefan, 18255 Kühlungsborn (DE); PORM, Karsten, 18236 Kröpelin (DE)
(74) Vertreter: 2SPL Patentanwälte PartG mbB

(57) **Zusammenfassung**

Ein Ausführungsbeispiel einer Vorrichtung 100 zum Arretieren einer Rotorwelle 101 einer Windenergieanlage, umfasst einen ein- oder mehrteiligen Arretierungsring 102, der an einer Rotorwelle 101 einer Windenergieanlage befestigt ist, wobei der Arretierungsring 102 eine Mehrzahl von Arretierungsausnehmungen 104 aufweist. Die Vorrichtung umfasst ferner einen Arretierungsvorrichtung 106, die ausgebildet ist, um durch eine vorwiegend radiale Bewegung einer Arretierungsstruktur 108 in eine der Arretierungsausnehmungen 104 der Mehrzahl von Arretierungsausnehmungen eine Rotation der Rotorwelle 101 zu blockieren.

## Beschreibung

### Technisches Gebiet

Ausführungsbeispiele befassen sich mit der Arretierung von Rotorwellen von Windenergieanlagen.

### Hintergrund

Verriegelungssysteme in Windenergieanlagen werden verwendet, um eine Rotation eines Rotors zu blockieren oder den Rotor in eine bestimmte Position festzustellen. Eine mechanische Verriegelung erfolgt in der Regel durch einen Bolzen, der in ein Element am Triebstrang der Windenergieanlage eingefahren wird. Das Element ist mit dem Rotor derart gekoppelt, dass durch das Einfahren des Bolzens die Bewegung des Rotors blockiert werden kann. Ein Feststellen des Rotors kann beispielsweise dem Wartungspersonal einen Zugang von dem Maschinenhaus in die Rotornabe der Windenergieanlage oder im Allgemeinen andere Maßnahmen für die Instandhaltung der Windenergieanlage ermöglichen.

Einige bestehende Systeme bewirken eine Verriegelung des Rotors durch das Einfahren des Bolzens in eine Arretierscheibe. Diese Verriegelungssysteme können allerdings die Abmessungen des Triebstrangs der Windenergieanlage signifikant vergrößern. Ein größerer Triebstrang kann durch die beschränkten Transportabmessungen den Transport des Triebstrangs und im Allgemeinen die Montage des Triebstrangs erschweren. Verriegelungssysteme mit Arretierscheiben können zudem den Zugang von dem Maschinenhaus in die Rotornabe einschränken.

Systeme mit anderen Elementen zur Verriegelung können ein Arretieren des Rotors nur bei montierter Rotornabe ermöglichen. Ein Defekt an dem Verriegelungselement geht für diese Verriegelungssysteme oftmals mit einem Austausch der kompletten Rotornabe einher.

### Zusammenfassung

Es besteht ein Bedarf für Windenergieanlagen ein verbessertes Konzept zum Arretieren eines Rotors oder einer Rotorwelle zu schaffen, eine kompaktere Bauweise und/oder einfachere Montage des Triebstrangs und/oder einen einfacheren Transport des Triebstrangs zu ermöglichen.

Dieser Bedarf könnte durch den Gegenstand einer der vorliegenden Ansprüche gedeckt werden.

Einige Ausführungsbeispiele beziehen sich auf Vorrichtungen zum Arretieren einer Rotorwelle einer Windenergieanlage. Die Vorrichtung umfasst einen ein- oder mehrteiligen Arretierungsring, der an einer Rotorwelle einer Windenergieanlage befestigt ist, wobei der Arretierungsring eine Mehrzahl von Arretierungsausnehmungen aufweist. Die Vorrichtung umfasst ferner eine Arretierungsvorrichtung, die ausgebildet ist, um durch eine vorwiegend radiale Bewegung einer Arretierungsstruktur in eine der Arretierungsausnehmungen der Mehrzahl von Arretierungsausnehmungen eine Rotation der Rotorwelle zu blockieren. Die Vorrichtung zum Arretieren einer Rotorwelle kann die Bewegung der Rotorwelle und/oder des Triebstrangs der Windenergieanlage mechanisch blockieren. Der Arretierungsring kann mit der Rotorwelle derart verbunden sein, dass eine Rotation der Rotorwelle eine Rotation des Arretierungsrings bewirkt. Der Arretierungsring kann für eine bessere Montage und Wartung der Vorrichtung zum Arretieren ein- oder mehrteilig ausgebildet sein. Der Arretierungsring kann mehrere Arretierungsausnehmungen für das Feststellen des Arretierungsrings aufweisen. Die Arretierungsstruktur kann radial zur Rotationsachse der Rotorwelle bewegt werden und in Rotationsrichtung ortsfest gelagert sein. Der Arretierungsring und die Arretierungsausnehmungen können derart angeordnet sein, dass die Arretierungsstruktur in eine Arretierungsausnehmung des Arretierungsrings radial eingefahren werden kann. Durch die radiale Bewegung kann die Rotation des Arretierungsrings und somit der Rotorwelle verhindert werden. Die Vorrichtung zum Arretieren einer Rotorwelle kann eine kompaktere Bauweise des Triebstrangs der Windenergieanlage ermöglichen.

In einem Ausführungsbeispiel umfasst eine Windenergieanlage eine Vorrichtung gemäß einem Ausführungsbeispiel einer Vorrichtung zum Arretieren einer Rotorwelle einer Windenergieanlage. Ferner umfasst die Windenergieanlage eine Rotornabe, die mit der Rotorwelle verbunden ist. Mittels der Vorrichtung zum Arretieren einer Rotorwelle kann auch eine Rotation der Rotornabe blockiert werden. Durch das Feststellen der Rotornabe kann der Betrieb der Windenergieanlage vorübergehend oder dauerhaft eingestellt werden. Das Feststellen der Rotornabe kann dem Wartungspersonal den sicheren Zugang vom Maschinenhaus in die Rotornabe ermöglichen.

Einige Ausführungsbeispiele beziehen sich auf Verfahren zum Herstellen einer Windenergieanlage. Das Verfahren umfasst ein Befestigen eines ein- oder mehrteiligen Arretierungsrings an einer Rotorwelle einer Windenergieanlage, wobei der Arretierungsring eine Mehrzahl von Arretierungsausnehmungen aufweist. Ferner umfasst das Verfahren ein Montieren einer Arretierungsvorrichtung, die ausgebildet ist, um durch eine vorwiegend radiale Bewegung einer Arretierungsstruktur in eine der Arretierungsausnehmungen der Mehrzahl von Arretierungsausnehmungen eine Rotation der Rotorwelle zu blockieren. Der Arretierungsring kann als Einheit oder Teile des Arretierungsrings können z.B. nacheinander oder paarweise an die Rotorwelle befestigt werden. Durch die Befestigung kann der Arretierungsring eine Rotation gemäß der Bewegung der Rotorwelle ausführen. Die Arretierungsvorrichtung kann z.B. außerhalb des Arretierungsrings montiert werden. Die Montage kann derart erfolgen, dass eine radiale Bewegung der Arretierungsstruktur in die Arretierungsausnehmungen des Arretierungsrings möglich ist. Bei einem mehrteiligen Arretierungsring kann ein Defekt an einer Arretierungsausnehmung oder an einem Teil des Arretierungsrings durch den Austausch eines Teilstücks des Arretierungsrings behoben werden. Eine Nutzung des Arretierungsrings oder der Arretierungsvorrichtung kann ohne montierte Rotornabe erfolgen.

### Figurenkurzbeschreibung

Einige Beispiele von Vorrichtungen und/oder Verfahren werden nachfolgend bezugnehmend auf die beiliegenden Figuren lediglich beispielhaft näher erläutert. Es zeigen:
- Fig. 1: ein Ausführungsbeispiel einer Vorrichtung zum Arretieren einer Rotorwelle einer Windenergieanlage;
- Fig. 2a: ein weiteres Ausführungsbeispiel einer Vorrichtung zum Arretieren einer Rotorwelle einer Windenergieanlage;
- Fig. 2b das in Fig. 2a: gezeigte Ausführungsbeispiel einer Vorrichtung zum Arretieren einer Rotorwelle in einer Seitenansicht;
- Fig. 2c das in Fig. 2a: gezeigte Ausführungsbeispiel einer Vorrichtung zum Arretieren einer Rotorwelle in einer Draufsicht;
- Fig. 3a ein: weiteres Ausführungsbeispiel einer Vorrichtung zum Arretieren einer Rotorwelle einer Windenergieanlage;
- Fig. 3b: ein Beispiel eines Schnitts eines Teils der in Fig. 3a gezeigten Vorrichtung zum Arretieren einer Rotorwelle;
- Fig. 4a: ein Teil eines Ausführungsbeispiels einer Vorrichtung zum Arretieren einer Rotorwelle einer Windenergieanlage;
- Fig. 4b: ein Beispiel eines Schnitts eines Teils der in Fig. 4a gezeigten Vorrichtung zum Arretieren einer Rotorwelle;
- Fig. 4c: ein Teil eines weiteren Ausführungsbeispiels einer Vorrichtung zum Arretieren einer Rotorwelle einer Windenergieanlage;
- Fig. 4d: ein Beispiel eines Schnitts eines Teils der in Fig. 4c gezeigten Vorrichtung zum Arretieren einer Rotorwelle;
- Fig. 5: ein Bespiel einer Arretierungsstruktur an einem Arretierungsring;
- Fig. 6: ein Beispiel eines Schnitts einer Arretierungsstruktur an einem Arretierungsring;
- Fig. 7: ein Ausführungsbeispiel einer Windenergieanlage mit einer Vorrichtung zum Arretieren einer Rotorwelle; und
- Fig. 8: ein Flussdiagramm für ein Ausführungsbeispiel eines Verfahrens zum Herstellen einer Windenergieanlage.

### Beschreibung

Einige Beispiele werden nun ausführlicher Bezug nehmend auf die beiliegenden Figuren beschrieben. Weitere mögliche Beispiele sind jedoch nicht auf die Merkmale dieser detailliert beschriebenen Ausführungsformen beschränkt. Diese können Modifikationen der Merkmale sowie Entsprechungen und Alternativen zu den Merkmalen aufweisen. Ferner soll die Terminologie, die hierin zum Beschreiben bestimmter Beispiele verwendet wird, nicht einschränkend für weitere mögliche Beispiele sein.

Gleiche oder ähnliche Bezugszeichen beziehen sich in der gesamten Beschreibung der Figuren auf gleiche oder ähnliche Elemente beziehungsweise Merkmale, die jeweils identisch oder auch in abgewandelter Form implementiert sein können, während sie die gleiche oder eine ähnliche Funktion bereitstellen. In den Figuren können ferner die Stärken von Linien, Schichten und/oder Bereichen zur Verdeutlichung übertrieben sein.

Wenn zwei Elemente A und B unter Verwendung eines "oder" kombiniert werden, ist dies so zu verstehen, dass alle möglichen Kombinationen offenbart sind, d. h. nur A, nur B sowie A und B, sofern nicht im Einzelfall ausdrücklich anders definiert. Als alternative Formulierung für die gleichen Kombinationen kann "zumindest eines von A und B" oder "A und/oder B" verwendet werden. Das gilt Äquivalent für Kombinationen von mehr als zwei Elementen.

Wenn eine Singularform, z. B. "ein, eine" und "der, die, das" verwendet wird und die Verwendung nur eines einzelnen Elements weder explizit noch implizit als verpflichtend definiert ist, können weitere Beispiele auch mehrere Elemente verwenden, um die gleiche Funktion zu implementieren. Wenn eine Funktion im Folgenden als unter Verwendung mehrerer Elemente implementiert beschrieben ist, können weitere Beispiele die gleiche Funktion unter Verwendung eines einzelnen Elements oder einer einzelnen Verarbeitungsentität implementieren. Es versteht sich weiterhin, dass die Begriffe "umfasst", "umfassend", "aufweist" und/oder "aufweisend" bei deren Gebrauch das Vorhandensein der angegebenen Merkmale, Ganzzahlen, Schritte, Operationen, Prozesse, Elemente, Komponenten und/oder einer Gruppe derselben beschreiben, dabei aber nicht das Vorhandensein oder das Hinzufügen eines oder mehrerer anderer Merkmale, Ganzzahlen, Schritte, Operationen, Prozesse, Elemente, Komponenten und/einer Gruppe derselben ausschließen.

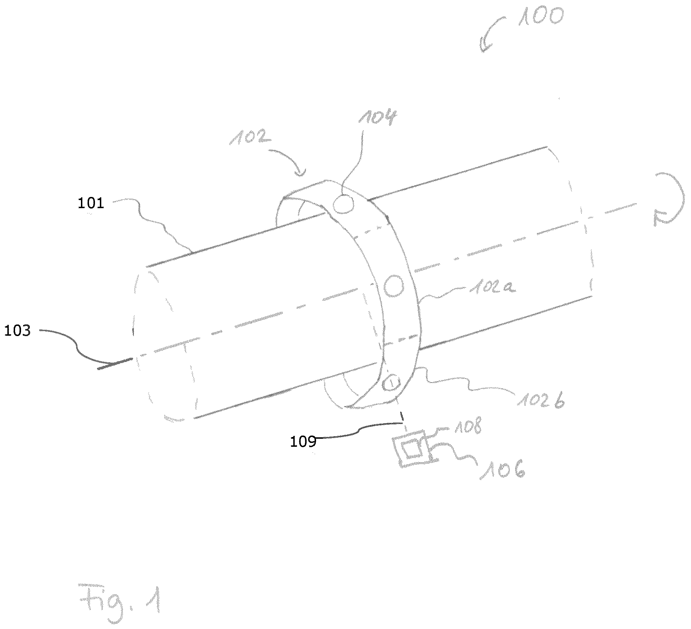

Fig. 1 zeigt ein Ausführungsbeispiel einer Vorrichtung 100 zum Arretieren einer Rotorwelle einer Windenergieanlage. Die Vorrichtung 100 umfasst einen ein- oder mehrteiligen Arretierungsring 102, der an einer Rotorwelle 101 einer Windenergieanlage befestigt ist, wobei der Arretierungsring 102 eine Mehrzahl von Arretierungsausnehmungen 104 aufweist. Ferner umfasst die Vorrichtung 100 eine Arretierungsvorrichtung 106, die ausgebildet ist, um durch eine vorwiegend radiale Bewegung einer Arretierungsstruktur 108 in eine der Arretierungsausnehmungen 104 der Mehrzahl von Arretierungsausnehmungen eine Rotation der Rotorwelle 101 zu blockieren.

Die Rotorwelle 101 ist beispielsweise um die Rotationsachse 103 drehbar gelagert sein. Die Vorrichtung 100 kann eine bestimmte Position der Rotorwelle 101 einstellen und eine Rotation der Rotorwelle 101 blockieren. Für das Arretieren der Rotorwelle 101 ist der Arretierungsring 102 mit Arretierungsausnehmungen 104 mit der Rotorwelle 101 (z.B. starr) verbunden. Der Arretierungsring 102 rotiert beispielsweise mit der Rotorwelle 101 mit. Der Arretierungsring 102 und die Arretierungsausnehmungen 104 am Arretierungsring 102 können derart ausgebildet sein, dass durch eine radiale Bewegung der Arretierungsstruktur 108 in eine der Arretierungsausnehmungen 104 die Rotation des Arretierungsrings 102 und somit der Rotorwelle 101 blockiert werden kann.

Eine vorwiegend radiale Bewegung der Arretierungsstruktur 108 kann, wie beispielhaft in Fig. 1 gezeigt, entlang einer Bewegungsrichtung 109 senkrecht zur Rotationsachse 103 der Rotorwelle erfolgen. Eine vorwiegend radiale Bewegung kann auch entlang einer Bewegungsrichtung sein, die einen Winkel von mehr als 70° (oder mehr als 80° oder mehr als 85°) mit der Rotationsachse 103 der Rotorwelle einschließt.

Beispielsweise kann die Arretierungsvorrichtung 106 zum Arretieren der Rotorwelle 101 die Arretierungsstruktur 108 ansteuern, sodass die Arretierungsstruktur 108 in eine Arretierungsausnehmung 104 einfährt und der Arretierungsring 102 somit die Rotorwelle 101 in einem festgestellten Zustand verbleibt. Im eingefahrenen Zustand der Arretierungsstruktur 108 kann sich die Arretierungsstruktur 108 teilweise oder vollständig in einer Arretierungsausnehmung 104 befinden. Die Arretierungsstruktur 108 kann beispielsweise nur entlang einer Bewegungsrichtung 109 beweglich implementiert sein. Dadurch kann eine Bewegung der in der Arretierungsausnehmung 104 eingefahrenen Arretierungsstruktur 108 entlang der Rotationsrichtung des Arretierungsrings 102 verhindert werden. Eine Rotation des Arretierungsrings 102 und der daran gekoppelten Rotorwelle 101 kann dadurch mechanisch blockiert und/oder vorwiegend in eine Ruheposition oder eine Parkposition festgestellt werden. Weitere Komponenten des Triebstrangs der Windenergieanlage, welche an den Arretierungsring oder an die Rotorwelle z.B. starr gekoppelt sind, können durch die Vorrichtung 100 ebenfalls in ihrer Position festgestellt werden.

Der Arretierungsring 102 kann derart mit der Rotorwelle 101 verbunden sein, dass eine Rotation der Rotorwelle 101 eine Rotation des Arretierungsrings 102 bewirkt. Zum Beispiel kann der Arretierungsring 102 starr mit der Rotorwelle 101 verbunden sein, sodass eine Umdrehungsfrequenz der Rotorwelle 101 und des Arretierungsrings 102 gleich ist. Der Arretierungsring 102 und die Rotorwelle 101 haben beispielsweise eine gemeinsame Rotationsachse 103. Der Durchmesser der Rotorwelle 101 kann axial variieren und beispielsweise an einem Ende der Rotorwelle (z.B. der Rotornabe zugewandtes Ende) einen maximalen Durchmesser aufweisen. Wie in Fig. 1 beispielhaft gezeigt, kann der Arretierungsring 102 eine äußere Oberfläche der Rotorwelle 101 umgeben. Der innere Radius des Arretierungsrings 102 kann größer sein als der Radius der umschlossenen Oberfläche der Rotorwelle 101. In einem Beispiel kann der Arretierungsring 102 an einem Ende oder in der Nähe eines Endes der Rotorwelle 101 angeordnet sein. Der innere Radius des Arretierungsrings 102 kann auch kleiner oder gleich dem Radius der äußeren Oberfläche an dem der Rotornabe zugewandten Ende der Rotorwelle 101 sein. Beispielsweise kann der Arretierungsring 102 über einen Flansch mit der Rotorwelle verbunden (z.B. verschraubt oder verschweißt) sein. Beispielsweise kann durch die Befestigung des Arretierungsrings 102 an die Rotorwelle eine Blockierung des Triebstrangs auch ohne eine (an die Rotorwelle) montierte Rotornabe erfolgen. Bei defekten oder beschädigten Arretierungsausnehmungen am Arretierungsring 102 kann eine Demontage der Rotornabe vermieden werden.

Der Arretierungsring 102 kann in radialer Richtung, wie z.B. in Richtung der Bewegungsrichtung 109, eine radiale Dicke aufweisen, die zumindest 3cm, zumindest 4cm oder zumindest 5cm ist. Der Arretierungsring 102 kann in axialer Richtung eine axiale Ausdehnung aufweisen, die mindestens 15cm, mindestens 18cm, mindestens 20cm oder mehr beträgt. Der Arretierungsring 102 kann eine größere axiale Ausdehnung als radiale Dicke aufweisen. Im Vergleich zu einer Arretierscheibe kann die Vorrichtung 100 oder der Triebstrang der Windenergieanlage mittels des Arretierungsrings 102 einen kleineren radialen Durchmesser aufweisen. Beispielsweise kann ein Triebstrang mit einer Vorrichtung zum Arretieren oder allgemein einem Verriegelungssystem nach dem vorgeschlagenen Konzept kompakter gebaut werden. Durch die kompaktere Bauweise des Triebstrangs könnte ein Platzbedarf im Maschinenhaus reduziert werden. Durch das Verwenden eines Arretierungsrings 102 könnte ein Zugang von dem Maschinenhaus in eine Rotornabe einfacher, schneller oder sicherer erfolgen. Ein kompakterer Triebstrang könnte den Transport des Triebstrangs erleichtern und/oder einen Transport im Rahmen der eingeschränkten Transportbedingungen ermöglichen.

Der Arretierungsring 102 kann einteilig oder mehrteilig ausgebildet sein. Ein einteiliger Arretierungsring 102 kann als eine Einheit einen Ring ausbilden und beispielsweise als Ganzes an die Rotorwelle 101 montiert werden. Wie in Fig. 1 durch die gestrichelten Linien am Arretierungsring 102 optional dargestellt, kann der Arretierungsring 102 eine Mehrzahl von Teilstücken 102a und 102b aufweisen. Die Teilstücke 102a-b können z.B. nacheinander oder paarweise miteinander und/oder mit der Rotorwelle verbunden werden. Ein mehrteiliger Arretierungsring 102 kann leichter oder besser transportiert werden und/oder einen Transport innerhalb der Transportrahmenbedingungen möglich machen. Ferner kann es genügen, bei einem Defekt am Arretierungsring 102 lediglich ein Teilstück des Arretierungsrings auszutauschen. Dadurch kann auf ein Abmontieren des gesamten Arretierungsrings 102, der Rotorwelle oder weiterer Komponenten des Triebstrangs oder der Rotornabe verzichtet werden. Beispielsweise kann durch die Segmentierung des Arretierungsrings 102 eine leichtere und schnellere Montage und/oder Austauschbarkeit bei einer Beschädigung erfolgen.

Wie in Fig. 1 beispielhaft gezeigt, kann jedes Teilstück 102a, 102b (zumindest) eine Arretierungsausnehmung 104 der Mehrzahl von Arretierungsausnehmungen aufweisen. In einem anderen Beispiel kann jedes Teilstück zwei, drei, vier oder mehr Arretierungsausnehmungen 104 aufweisen.

Eine Arretierungsausnehmung kann auch allgemein als Ausnehmung bezeichnet werden. Eine Arretierungsausnehmung 104 der Mehrzahl der Arretierungsausnehmungen kann einen Bereich oder einen Platz für eine (radial einführbare) Arretierungsstruktur 108 bereitstellen. Die Arretierungsausnehmung 104 kann z.B. einen Teil der Arretierungsstruktur 108 aufnehmen. Durch die Arretierungsausnehmung 104 kann in dem Arretierungsring 102 ein Hohlraum zur Aufnahme der Arretierungsstruktur 108 bereitgestellt werden. Der Hohlraum kann sich von einer Oberfläche des Arretierungsrings 102, die der Oberfläche der Rotorwelle abgewandt ist, in Richtung der Innenfläche des Arretierungsrings 102, die der Oberfläche der Rotorwelle zugewandt ist, erstrecken. Wie in Fig. 1 beispielhaft gezeigt, kann die Arretierungsausnehmung 104 symmetrisch, wie z.B. kreisförmig, ausgebildet sein und in einer Mitte in Bezug auf die axiale Dicke des Arretierungsrings 102 angeordnet sein. In einem anderen Beispiel können die Ausnehmungen 104 anders als dargestellt, wie z.B. viereckig, vieleckig oder asymmetrisch, ausgebildet sein. Eine Form, Abmessung oder Tiefe der Ausnehmung 104 kann auf eine Form, Länge, Abmessung, Entfernung oder Bewegung der Arretierungsstruktur 108 abgestimmt sein. Beispielsweise kann die Ausnehmung 104 passgenau zur Arretierungsstruktur 108 mit einem Spiel von weniger als 5mm (oder weniger als 2mm oder spielfrei) ausgebildet sein. Eine Ausnehmung 104 und eine von der Ausnehmung 104 aufgenommene Arretierungsstruktur 108 können eine formschlüssige Verbindung darstellen. Die Passgenauigkeit kann eine bessere mechanische Blockierung der Bewegung des Arretierungsrings 102 ermöglichen.

In einem anderen Beispiel kann sich eine Ausnehmung 104 von einem Rand des Arretierungsrings 104 entlang der axialen Dicke zu einer Mitte (in Bezug auf die axiale Dicke des Arretierungsrings) erstrecken und eine (z.B. zur Rotationsachse parallele) Kerbe, Vertiefung oder Öffnung in dem Arretierungsring 102 ausbilden.

Eine Ausnehmung 104 kann teilweise oder vollständig entlang der radialen Bewegungsrichtung 109 am Arretierungsring 102 ausgebildet sein. Zum Beispiel kann eine Ausnehmung 104 eine (vollständig durchdringende) Öffnung, ein Loch, eine Bohrung, eine (nicht vollständig durchringende) Vertiefung oder ein Sackloch sein. Eine Ausnehmung 104 kann eine Tiefe aufweisen, die zumindest ausreicht, um bei Aufnahme der Arretierungsstruktur 108 ein Arretieren des Arretierungsrings 102 sicher und stabil zu ermöglichen. Zum Beispiel können sich die Arretierungsausnehmungen 104 der Mehrzahl von Arretierungsausnehmungen radial durch den gesamten Arretierungsring erstrecken oder sich bis zu einer Tiefe von maximal 90% der radialen Dicke des Arretierungsrings in den Arretierungsring 102 erstrecken. Beispielsweise kann die Tiefe der Ausnehmung maximal 50%, maximal 60%, maximal 70% oder maximal 80% der radialen Dicke des Arretierungsrings betragen. In einem anderen Beispiel können sich die Arretierungsausnehmungen 104 der Mehrzahl von Arretierungsausnehmungen radial bis in eine Tiefe von zumindest 2 cm, zumindest 3cm, zumindest 4cm, zumindest 5cm oder mehr in den Arretierungsring 102 erstrecken. Im Vergleich zu einer Öffnung kann eine nicht vollständig durchdringende Ausnehmung 104 verhindern, dass durch die Bewegung in radialer Richtung die Arretierungsstruktur 108 der Rotorwelle 101 zu nahe oder in Berührung kommt.

Die axiale Abmessung der Arretierungsausnehmung kann sich in einer Tiefe des Arretierungsrings 102 von der axialen Abmessung der Ausnehmung an der Oberfläche des Arretierungsrings 102 unterscheiden. Beispielsweise kann in einer Tiefe der Durchmesser der Ausnehmung kleiner sein. Beispielweise kann die Ausnehmung in der Tiefe in Richtung der radialen Bewegungsrichtung 109 rund, spitz, kegelförmig oder trapezförmig sein.

Gemäß dem in Fig. 1 gezeigten Beispiel, können die Arretierungsausnehmungen 104 der Mehrzahl von Arretierungsausnehmungen über den Umfang des Arretierungsrings 102 verteilt sein. Die Anzahl der Arretierungsausnehmungen 104 über den Umfang des Arretierungsrings 102 kann die Anzahl der (Ruhe- oder Park-) Positionen zum Feststellen des Arretierungsrings 102 und der Rotorwelle 101 bestimmen. Mit zunehmender Anzahl von Ausnehmungen über den Umfang des Arretierungsrings 102 kann der Arretierungsring 102 schneller und/oder in mehr unterschiedlichen Positionen arretiert werden. Mit zunehmender Anzahl von Ausnehmungen über den Umfang des Arretierungsrings 102 können mit der Rotorwelle (über die Rotornabe) gekoppelte Rotorblätter genauer in Bezug auf in eine gewünschte Position arretiert oder geparkt werden. Mit zunehmender Anzahl von Ausnehmungen über den Umfang des Arretierungsrings 102 kann trotz eines Defekts an einer Arretierungsausnehmung eine Arretierung der Rotorwelle sicher und ohne signifikante Einschränkung erfolgen, da weiterhin genügend intakte Arretierungsausnehmungen 104 zur Arretierung vorliegen. In einem Beispiel können Arretierungsausnehmungen 104 über den Umfang des Arretierungsrings 102 derart ausgebildet sein, dass die Rotorwelle in Bezug auf eine Referenzposition in 0-Uhr-, 3-Uhr, 6-Uhr und 9-Uhr Stellung arretiert werden kann. In einem Beispiel kann ein Arretierungsring 102 zumindest 4, zumindest 5, zumindest 6 oder mehr Arretierungsausnehmungen aufweisen. Beispielsweise kann die Vorrichtung 100 zum Arretieren auch mit einem Arretierungsring mit ein, zwei oder drei Ausnehmungen betrieben werden.

Die Arretierungsvorrichtung 106 kann eine Bewegung der Arretierungsstruktur 108 in einer Bewegungsrichtung ermöglichen, die beispielsweise vorwiegend radial ist. Die Arretierungsvorrichtung 106 kann die Arretierungsstruktur 108 derart bewegen, dass die Arretierungsstruktur 108 in Richtung der Ausnehmung 104 zum Arretieren des Arretierungsrings 102 bewegt oder eingefahren werden kann. Die Arretierungsvorrichtung 106 kann die Arretierungsstruktur 108 auch derart bewegen, dass die Arretierungsstruktur 108 von der Ausnehmung 104 in die (entgegengesetzte) Richtung zum Entriegeln des Arretierungsrings 102 bewegt werden kann. Optional kann die Arretierungsvorrichtung 106 weitere Komponenten z.B. eine Führungsstruktur für die Ausnehmung, einen Sensor zum Bestimmen einer Position einer Ausnehmung und/oder Mittel zum Abbremsen des Arretierungsrings 102 vor einem Arretieren aufweisen.

Die Arretierungsstruktur 108 kann entlang der radialen Bewegungsrichtung 109 (z.B. in radialer Richtung) in Richtung der Ausnehmung 104 oder in dazu entgegengesetzter Richtung bewegt werden. Die Arretierungsstruktur 108 kann beispielsweise hydraulisch, mechanisch oder elektromechanisch bewegt werden. In einem eingefahrenen und/oder festgestellten Zustand des Arretierungsrings 102 kann sich die Arretierungsstruktur 108 teilweise oder vollständig in der Ausnehmung 104 befinden. Die Arretierungsstruktur 108 kann in der Ausnehmung 104 eine Kraft entgegen der Rotationsrichtung des Arretierungsrings 102 bewirken. Dadurch kann die Arretierungsstruktur 108 eine Rotation des Arretierungsrings 102 blockieren. Die Arretierungsstruktur 108 kann auf eine Form der Ausnehmungen 104 abgestimmt sein. Die Arretierungsstruktur kann z.B. rotationssymmetrisch, zylindrisch, kegelstumpfförmig, viereckig oder vieleckig ausgebildet sein. Die Arretierungsstruktur 108 kann an einer Seite, die der Ausnehmung 104 zugewandt ist, rund, trapezförmig oder spitz ausgebildet sein oder beispielsweise an dieser Seite einen kleineren Durchmesser im Vergleich zu einer Mitte der Arretierungsstruktur 108 aufweisen. Dadurch kann ein Arretieren des Arretierungsrings 102 einfacher oder effizienter erfolgen. Zum Beispiel kann die Arretierungsstruktur 108 ein Arretierungsbolzen sein. In manchen Ausführungsbeispielen kann die Arretierungsstruktur 108 als Rotorlock-Pin bezeichnet sein. Bereits eine Arretierungsstruktur 108 kann ausreichend sein, um eine Bewegung der Rotorwelle zu blockieren. Es können jedoch auch mehrere Arretierungsstrukturen 108 über den Umfang der Rotorwelle verteilt sein, um eine Bewegung der Rotorwelle gemeinsam zu blockieren. Da jedoch eine Arretierungsstrukturen 108 ausreichend ist, kann der Aufwand (z.B. Anzahl an Bauteilen und/oder Implementierungskosten) gering gehalten werden, wenn nur eine oder maximal zwei Arretierungsstrukturen 108 implementiert werden. Ein zweite Arretierungsstrukturen 108 kann sinnvoll sein, um bei Ausfall der ersten Arretierungsstrukturen 108 Redundanz zu haben. Da die Ausfallwahrscheinlichkeit jedoch gering ist, kann auch lediglich eine Arretierungsstrukturen 108 ausreichen. Beispielsweise kann eine Windenergieanlage ermöglicht werden, die maximal zwei Arretierungsstrukturen 108 (z.B. Arretierungsbolzen) zum Blockieren der Bewegung der Rotorwelle aufweist. Zum Beispiel können maximal zwei Arretierungsvorrichtung 106 ausgebildet sein, um durch eine vorwiegend radiale Bewegung von maximal zwei Arretierungsstrukturen 108 in maximal zwei der Arretierungsausnehmungen 104 der Mehrzahl von Arretierungsausnehmungen eine Rotation der Rotorwelle 101 zu blockieren. In diesem Beispiel weist die Windenergieanlage bis auf die maximal zwei Arretierungsstrukturen 108 keine sonstigen Strukturen auf, die an oder in den ein- oder mehrteiligen Arretierungsring (oder optional auch an einem anderen mit der Rotorwelle drehfest verbundenen Bauteil) eingreifen, um eine Bewegung der Rotorwelle zu blockieren. Zum Beispiel kann die Bewegung der Rotorwelle nur über die maximal zwei Arretierungsstrukturen 108 blockiert werden.

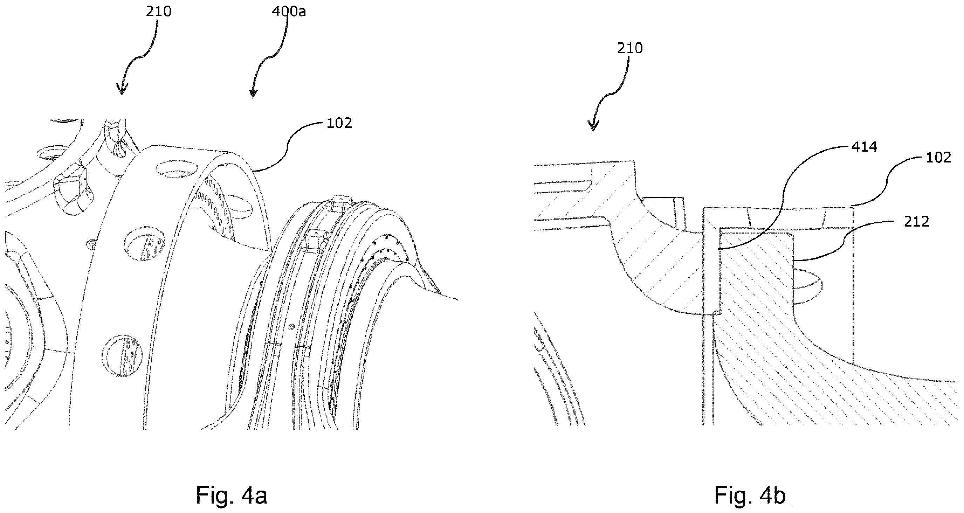

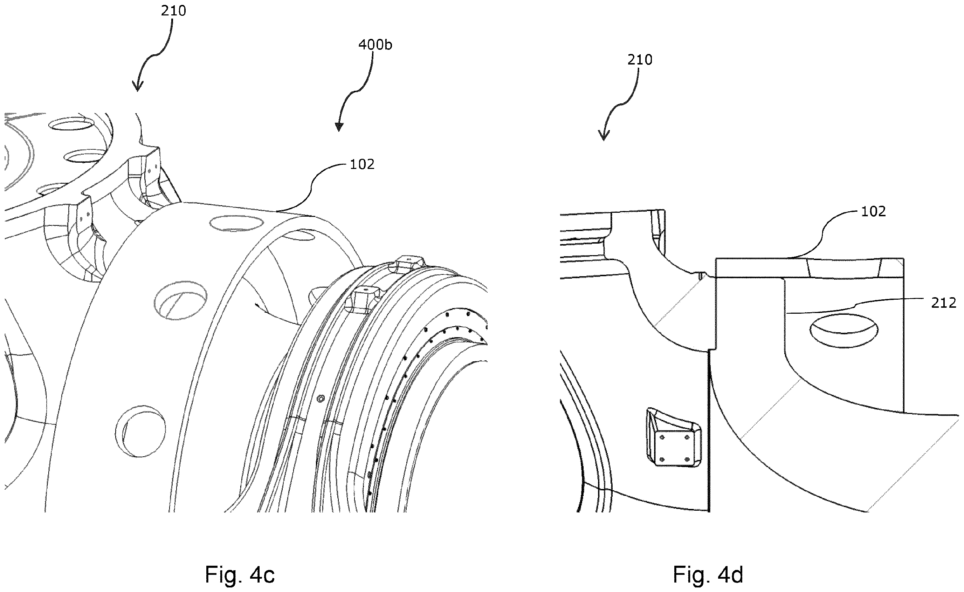

Ein Triebstrang einer Windenergieanlage umfasst leistungsübertragende Komponenten, wie z.B. die Rotorwelle. Die Rotorwelle 101 kann z.B. starr mit einer Rotornabe (z.B. Rotornabe 210 in den nachfolgenden Figuren) verbunden sein. Eine Rotation der Rotornabe kann z.B. eine Rotation der Rotorwelle 101 bewirken. Beispielsweise kann die Rotorwelle 101 über einen Rotorwellenflansch direkt mit der Rotornabe verbunden sein. Zum Beispiel kann die Rotorwelle 101 zur Verbindung mit der Rotornabe einen minimalen Lochkreisdurchmesser von zumindest 1m, zumindest 1,2m, zumindest 1,5m oder mehr aufweisen. Die Rotorwelle 101 kann entlang der Rotationsachse 103 verschiedene Durchmesser (z.B. kleiner als der minimale Lochkreisdurchmesser zur Befestigung der Rotornabe) haben. In einem anderen Beispiel kann die Rotorwelle 101 über den Arretierungsring 102 mit der Rotornabe gekoppelt sein (vgl. Ausführungen zu Figs.4a-b).

Die Vorrichtung 100 kann als ein Verriegelungssystem für Windenergieanlagen verwendet werden. Die Vorrichtung kann ein Arretieren, Feststellen, Verriegeln oder ein Parken in eine bestimmte Position des Arretierungsrings 102, der Rotorwelle 101, einer Rotornabe oder einer dazu gekoppelten Komponente ermöglichen.

Weitere Einzelheiten und optionale Aspekte der Vorrichtung 100 sind in Verbindung mit dem vorgeschlagenen Konzept oder einem oder mehreren der im Folgenden beschriebenen Beispiele beschrieben. In den nachfolgenden Ausführungsbeispielen wird die Vorrichtung zum Arretieren einer Rotorwelle in Verbindung mit Komponenten einer Windenergieanlage, wie z.B. einer Rotornabe, einem Rotorwellenlagergehäuse oder einem Rotorwellenlager beschrieben. Es ist zu verstehen, dass die Vorrichtung 100 zum Arretieren einer Rotorwelle unabhängig von den genannten Komponenten implementiert werden kann. Ausführungsbeispiele von Vorrichtungen können in Verbindung mit den genannten Komponenten beschrieben sein, um beispielhafte Anordnungen der Vorrichtung 100 näher auszuführen.

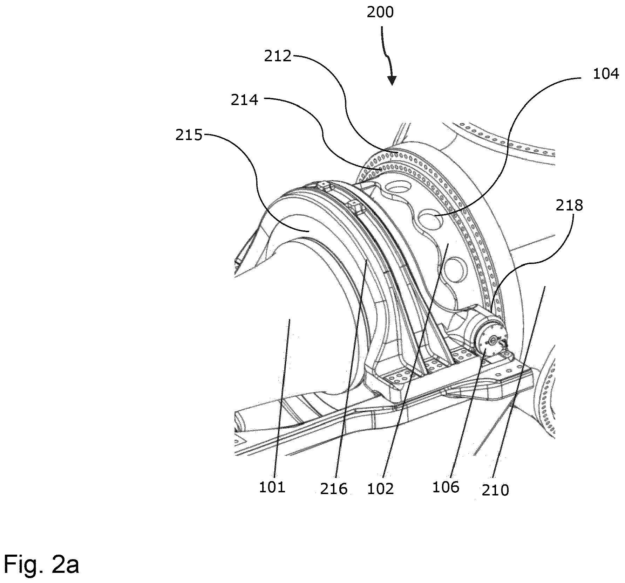

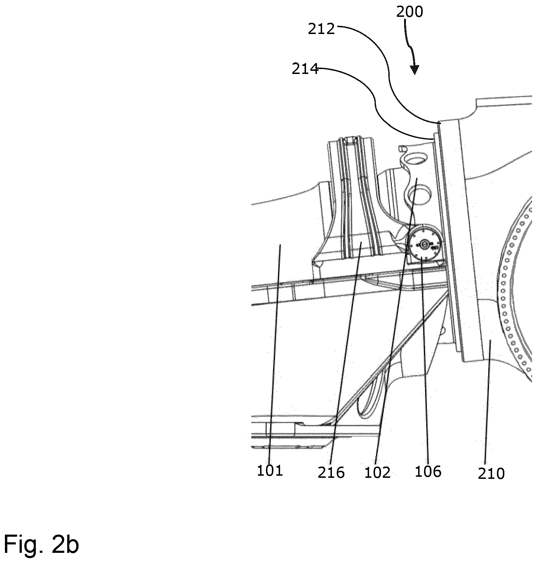

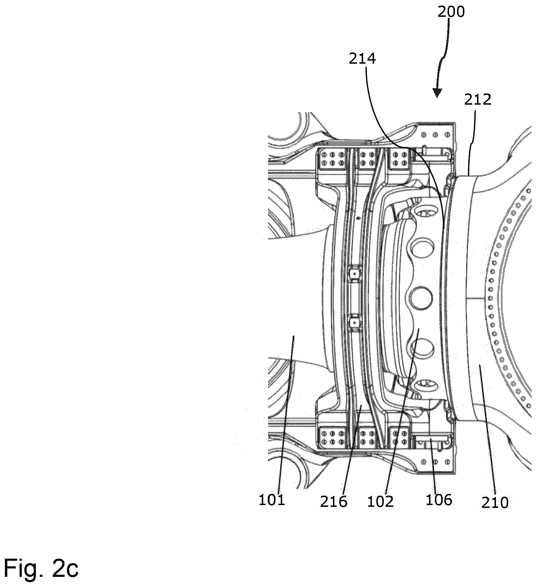

Fig. 2a zeigt ein weiteres Ausführungsbeispiel einer Vorrichtung 200 zum Arretieren einer Rotorwelle einer Windenergieanlage. Fig. 2b zeigt die Vorrichtung 200 in einer Seitenansicht und Fig. 2c zeigt die Vorrichtung 200 in einer Draufsicht. Die Vorrichtung 200 kann ähnlich wie die Vorrichtung 100, die in Verbindung mit Fig. 1 beschriebenen wurde, implementiert sein. In Fig. 2a-c ist die Vorrichtung 200 in Verbindung mit einer Rotornabe 210 dargestellt. Die Rotorwelle 101 weist einen Rotorwellenflansch 212 auf. Über den Rotorwellenflansch 212 ist die Rotorwelle 101 mit der Rotornabe 210 verbunden, wie z.B. verschraubt oder verschweißt.

Gemäß dem in den Figuren 2a-c gezeigten Ausführungsbeispiel kann der Arretierungsring 102 einen L-förmigen oder T-förmigen Befestigungsflansch 214 aufweisen. Der Arretierungsring 102 kann über den Befestigungsflansch 214 an (den Rotorwellenflansch 212) der Rotorwelle 101 befestigt werden. Die Befestigung kann über eine Verschraubung erfolgen. Über den Befestigungsflansch 214 kann der Arretierungsring 102 starr mit der Rotorwelle 101 gekoppelt werden, sodass ein Arretieren des Arretierungsrings eine Arretierung der Rotorwelle 101 bewirken kann. Über den Rotorwellenflansch 212 kann durch die Arretierung der Rotorwelle 101 ferner eine Arretierung der Rotornabe 210 erreicht werden. Der Arretierungsring 102 kann auf einer zur der Rotornabe 210 zugewandten Seite einen Befestigungsflansch 214 aufweisen.

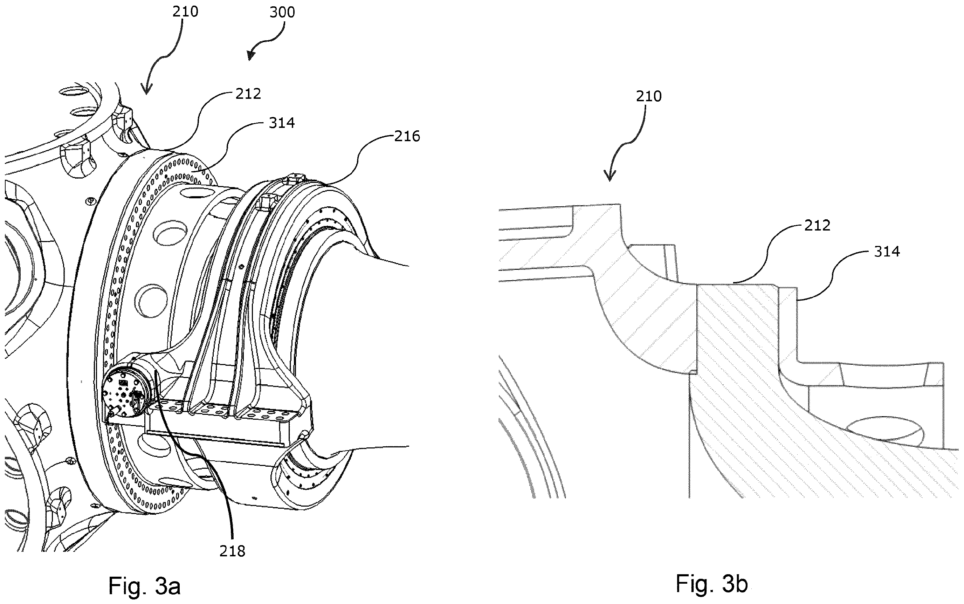

Wie in Fig. 2b zu erkennen ist, kann der Befestigungsflansch 214 des Arretierungsrings 102 einen kleineren radialen Durchmesser aufweisen als der Rotorwellenflansch 212 der Rotornabe 101. Figuren 3a-b zeigen ein weiteres Ausführungsbeispiel einer Vorrichtung 300 mit einem Befestigungsflansch 314 des Arretierungsrings und einem Rotorwellenflansch 212. Wie in Fig. 3b im Schnittbild zu erkennen ist, weisen der Befestigungsflansch 314 und der Rotorwellenflansch 212 einen (vorwiegend) gleichen Durchmesser auf, sodass beispielsweise durch eine größere Verbindungsfläche eine bessere Kraftübertragung von dem Arretierungsring auf die Rotorwelle 101 erfolgen kann.

Weitere Einzelheiten und optionale Aspekte der Vorrichtung 300 sind in Verbindung mit dem vorgeschlagenen Konzept oder einem oder mehreren der zuvor oder im Folgenden beschriebenen Beispiele beschrieben.

Die Figuren 4a-b zeigen ein Teil eines weiteres Ausführungsbeispiels einer Vorrichtung 400a mit einer alternativen Möglichkeit zur Verbindung des Arretierungsrings und der Rotorwelle. Im Gegensatz zu den vorhergehenden Ausführungen kann die Rotorwelle über den Arretierungsring (indirekt) mit der Rotornabe verbunden sein. Wie in Fig. 4b im Schnittbild zu erkennen ist, kann der Arretierungsring einen Befestigungsflansch 414 auf der Innenseite aufweisen, der zwischen der Rotornabe 210 und dem Rotorwellenflansch 212 angeordnet werden kann. Diese Anordnung kann eine kompaktere Bauweise der Vorrichtung 400a und/oder des Triebstrangs z.B. im Hinblick auf die radialen Abmessungen ermöglichen. Ferner kann eine Erhöhung des Wirkradius und somit eine Reduzierung der Arretierungslasten auf die Komponenten erzielt werden. Außerdem könnte man durch Beschichtungen am Befestigungsflansch 414 reibwerterhöhende Maßnahmen zwischen Rotorwelle und Rotornabe anwenden.

Weitere Einzelheiten und optionale Aspekte der Vorrichtung 400a sind in Verbindung mit dem vorgeschlagenen Konzept oder einem oder mehreren der zuvor oder im Folgenden beschriebenen Beispiele beschrieben.

Die Figuren 4c-d zeigen ein Teil eines weiteres Ausführungsbeispiels einer Vorrichtung 400b mit einer alternativen Möglichkeit zur Verbindung des Arretierungsrings und der Rotorwelle. Im Gegensatz zu den vorhergehenden Ausführungen kann der Arretierungsring mit der Rotorwelle ohne Befestigungsflansch kraft- oder formschlüssig mit der Rotornabe verbunden werden. Ein Arretierungsring ohne Befestigungsflansch könnte einfacher hergestellt werden.

Weitere Einzelheiten und optionale Aspekte der Vorrichtung 400b sind in Verbindung mit dem vorgeschlagenen Konzept oder einem oder mehreren der zuvor oder im Folgenden beschriebenen Beispiele beschrieben.

Der Arretierungsring kann, wie in den Figuren 2a-c dargestellt, an einer zu dem Befestigungsflansch 214 gegenüberliegenden Seite ein Wellenprofil aufweisen. Das Wellenprofil kann auf eine Form und Anordnung der Arretierungsausnehmungen abgestimmt sein. Beispielsweise kann die Form, das Profil, die Beschaffenheit des Arretierungsrings 102 beliebig ausgebildet sein, sodass eine (durch die aufgenommene Arretierungsstruktur ausgeübte) Kraft gleichmäßiger auf den Arretierungsring wirken kann.

Windenergieanlagen können ein Rotorwellenlagergehäuse umfassen. Die Figuren 2a-c und Fig. 3a zeigen ein Rotorwellenlagergehäuse 216, das in manchen Ausführungsbeispielen als Stehlagergehäuse bezeichnet sein kann. Das Rotorwellenlagergehäuse 216 kann ein Rotorwellenlager 215 für eine drehbare Anordnung der Rotorwelle 101 umfassen. Das Rotorwellenlagergehäuse 216 kann das Rotorwellenlager 215 vor einer Umgebung schützen und eine gleichmäßigere Lastverteilung im Rotorwellenlager 215 gewährleisten. In einigen Ausführungsbeispielen kann die Arretierungsstruktur 108 in einer Führungsstruktur 218 geführt sein, die Teil des Rotorwellenlagergehäuses 216 ist. Beispielsweise kann die Führungsstruktur 218, die Arretierungsvorrichtung (106) und/oder die Arretierungsstruktur (108) in eine Pratze des Rotorwellenlagergehäuses integriert sein. Dadurch kann eine kraftflussoptimale Integration der Arretierungsstruktur 108 in die Pratze des Rotorwellenlagergehäuses 216 erfolgen. Durch diese Anordnung kann eine höhere Passgenauigkeit durch Reduzierung der Bauteile in der Toleranzkette zwischen der Arretierungsstruktur 108 und dem Arretierungsring 102 erzielt werden. Ferner kann auf eine separate Komponente für die Integration der Führungsstruktur 218 verzichtet werden, sodass ein zusätzliches Ausrichten der separaten Komponente (für die Passgenauigkeit der Arretierungsstruktur in eine Arretierungsausnehmung) vermieden werden kann.

In einigen Ausführungsbeispielen kann der Arretierungsring 102 axial zwischen dem Rotorwellenlager 215 und der Rotornabe 210 an der Rotorwelle 101 befestigt sein. Die Rotorwelle 101 kann über mehrere Rotorwellenlager 215 (z.B. über ein erstes und zweites Hauptlager) gelagert sein. Beispielsweise kann der Arretierungsring 102 axial zwischen einem der Rotornabe axial am nächsten liegenden Rotorwellenlager 215 und der Rotornabe 210 an der Rotorwelle 101 befestigt sein. In anderen Ausführungsbeispielen kann der Arretierungsring 102 axial zwischen dem Rotorwellenlager 215 (oder einem den Rotorwellenlager 215 umfassenden Teil des Rotorwellenlagergehäuses 216) und einem Getriebe des Triebstrangs an der Rotorwelle 101 befestigt sein. In manchen Ausführungsbeispielen kann der Arretierungsring 102 axial zwischen dem ersten Hauptlager und dem zweiten Hauptlager der Rotornabe 210 an der Rotorwelle 101 befestigt sein.

Beispielsweise kann der Arretierungsring 102 breiter als dargestellt und in Richtung zum Rotorwellenlager 215 in axialer Richtung (entlang der Rotationsachse) ausgebildet sein.

In einigen Implementierungen kann die Arretierungsvorrichtung 106 axial zwischen dem Rotorwellenlager 215 und der Rotornabe 210 angeordnet sein. Die Arretierungsvorrichtung kann in einer (vorwiegend) gleichen Position wie die Arretierungsausnehmungen 104 in Bezug auf eine axiale Richtung (z.B. entlang der Rotationsachse) ausgebildet sein. In radialer Richtung kann die Arretierungsvorrichtung in einem entriegelten Zustand außerhalb von dem Arretierungsring oder vergleichsweise mit der Position des Arretierungsrings weiter außerhalb von der Rotationsachse angeordnet sein.

Weitere Einzelheiten und optionale Aspekte der Vorrichtung 200 sind in Verbindung mit dem vorgeschlagenen Konzept oder einem oder mehreren der zuvor oder im Folgenden beschriebenen Beispiele beschrieben.

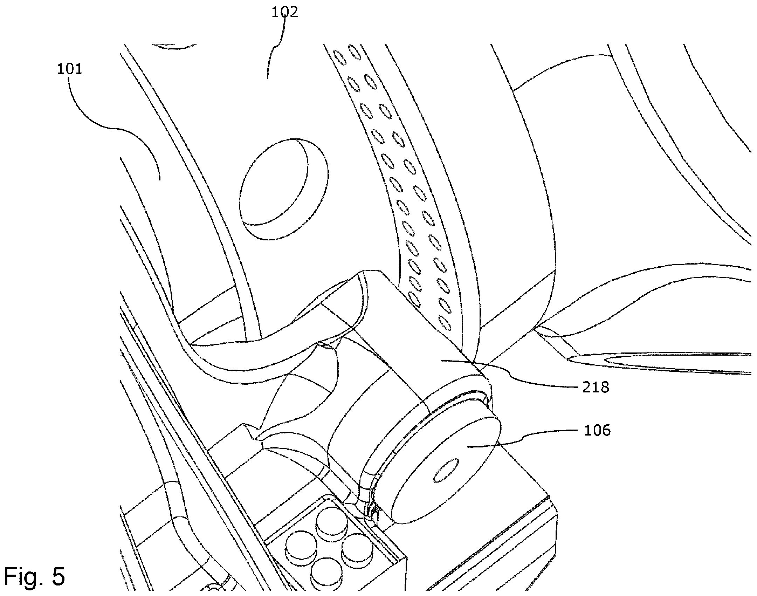

Fig. 5 zeigt beispielhaft eine Implementierung einer Arretierungsstruktur 108 (z.B. Arretierungsbolzen) in der Führungsstruktur 218, die Teil des Rotorwellenlagergehäuses ist. Die Führungsstruktur 218 kann eine Arretierungsstruktur 108 teilweise oder vollständig umgeben. Die Führungsstruktur 218 kann die radiale Bewegungsrichtung der Arretierungsstruktur 108 bestimmen. In manchen Ausführungsbeispielen kann die Führungsstruktur 218 unabhängig vom Rotorwellenlagergehäuse implementiert und z.B. an einer stationären Komponente der Windenergieanlage befestigt sein. Die Führungsstruktur 218 kann Elemente, wie z.B. eine Beschichtung, für eine reibungsärmere, effizientere Bewegung der Arretierungsstruktur umfassen.

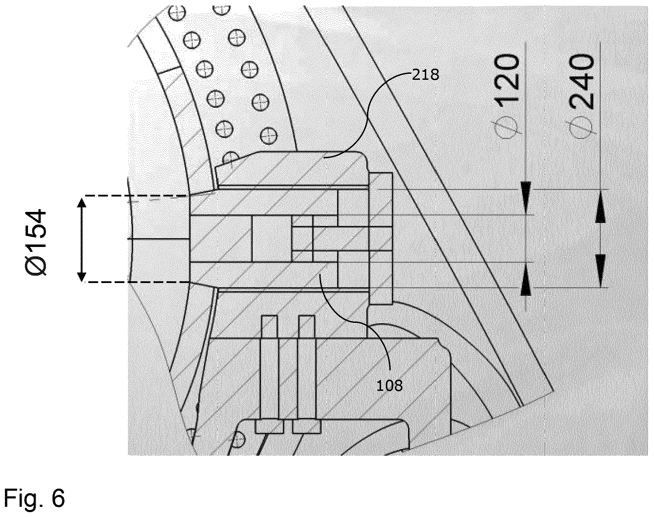

Fig. 6 zeigt in einer Schnittdarstellung eine mögliche Implementierung eines Arretierungsbolzens 108 in der Führungsstruktur 218. In dem gezeigten Beispiel hat der Arretierungsbolzen einen maximalen Durchmesser von 240mm und für die Hydraulik einen Innendurchmesser von 120mm. Der Durchmesser des Arretierungsbolzens kann entlang der radialen Bewegungsrichtung einen kleineren Durchmesser als den maximalen Durchmesser, wie z.B. 154mm, haben. Der Arretierungsbolzen (oder allgemein Arretierungsstruktur) kann einen Durchmesser von z.B. zumindest 10 cm, zumindest 11cm, zumindest 12cm, zumindest 15cm oder mehr aufweisen.

Die Vorrichtungen 100, 200, 300, 400 zum Arretieren einer Rotorwelle einer Windenergieanlage, die in Zusammenhang mit den Figuren 1, 2a-c, 3a-b und 4a-b beschrieben wurden, können ähnlich implementiert sein. Die Vorrichtungen zum Arretieren einer Rotorwelle können unabhängig von einer Rotornabe einer Windenergieanlage und in manchen Ausführungen unabhängig von einem Rotorwellenlagergehäuse implementiert sein und gewartet oder ausgetauscht werden. Die Vorrichtungen können ein radiales Verfahren für eine Arretierungsstruktur oder ein radiales Verriegelungssystem bezogen zur Rotationsachse der Rotorwelle darstellen. Durch den Arretierungsring kann eine steifigkeitserhöhende Wirkung auf den rotornabenseitigen Rotorwellenflansch erzielt werden. Durch das vorgeschlagene Verriegelungssystem kann eine Reduzierung von Fehlbedienungen durch eine Erhöhung der Übersichtlichkeit der Bauteile am Triebstrang erreicht werden. Durch die Reduktion von Fehlbedienungen kann z.B. eine Beschädigung oder ein Austausch des Verriegelungssystems vermieden werden. Die Vorrichtung zum Arretieren kann ein besseres, effizienteres, schnelleres, zuverlässigeres oder sichereres Feststellen der Rotorwelle, der Rotornabe, des Rotors oder des Triebstrangs ermöglichen.

Weitere Einzelheiten und optionale Aspekte der Vorrichtungen zum Arretieren einer Rotorwelle (wie z.B. die Vorrichtungen 100, 200, 300 und 400) sind in Verbindung mit dem vorgeschlagenen Konzept oder einem oder mehreren der zuvor oder im Folgenden beschriebenen Beispiele beschrieben.

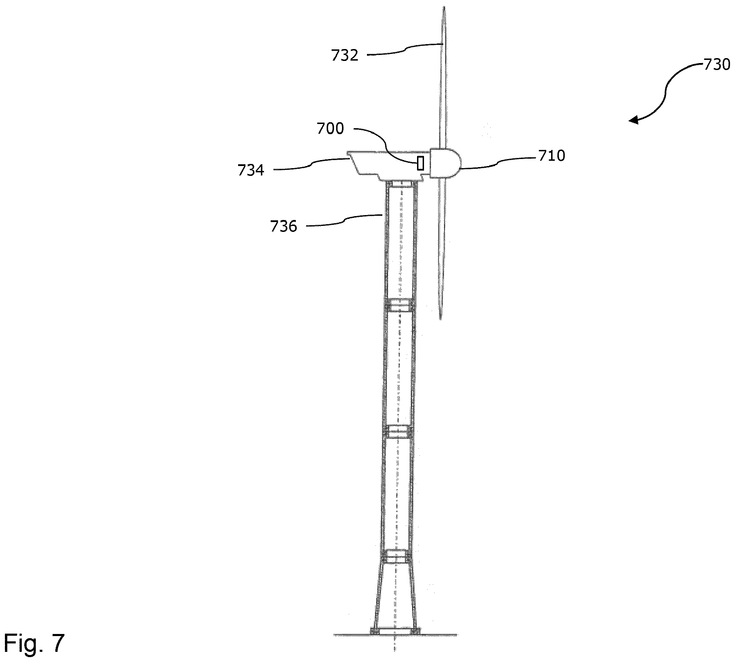

Fig. 7 zeigt ein Ausführungsbeispiel einer Windenergieanlage 730, die eine Vorrichtung 700 zum Arretieren einer Rotorwelle nach einem der vorgeschlagenen Konzepte umfasst. Ferner umfasst die Windenergieanlage 730 einen Rotor mit einer Rotornabe 710 und Rotorblättern 732. Die Rotornabe 710 ist mit der Rotorwelle der Windenergieanlage 730 verbunden. Die Rotorwelle, die Vorrichtung 700 und weitere Komponenten des Triebstrangs der Windenergieanlage 730 können in einem Maschinenhaus 734 angeordnet sein. Das Maschinenhaus 734 kann von einen Turm 736 der Windenergieanlage getragen werden. Die Vorrichtung 700 kann die Rotorwelle und somit die Rotornabe 710 arretieren. Dadurch kann der Betrieb der Windenergieanlage 730 pausiert oder eingestellt werden. Durch die Arretierung kann beispielsweise dem Wartungspersonal ein sicherer Zugang vom Maschinenhaus in die Rotornabe ermöglicht werden.

Weitere Einzelheiten und optionale Aspekte der Vorrichtung 700 und der Windenergieanlage 730 sind in Verbindung mit dem vorgeschlagenen Konzept oder einem oder mehreren der zuvor oder im Folgenden beschriebenen Beispiele beschrieben.

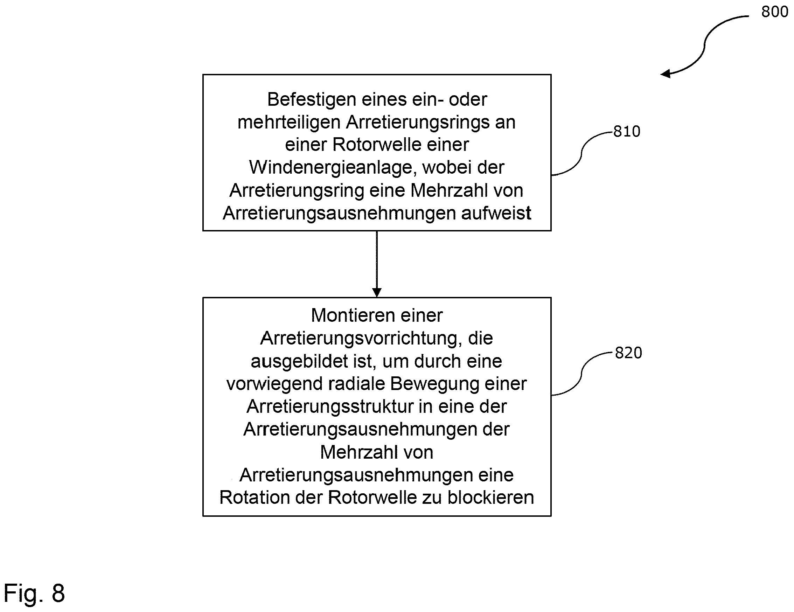

Fig. 8 zeigt ein Flussdiagramm für ein Ausführungsbeispiel eines Verfahrens 800 zum Herstellen einer Windenergieanlage. Das Verfahren 800 umfasst ein Befestigen 810 eines ein- oder mehrteiligen Arretierungsrings an einer Rotorwelle einer Windenergieanlage. Der Arretierungsring weist eine Mehrzahl von Arretierungsausnehmungen auf. Ferner umfasst das Verfahren 800 ein Montieren 820 einer Arretierungsvorrichtung, die ausgebildet ist, um durch eine vorwiegend radiale Bewegung einer Arretierungsstruktur in eine der Arretierungsausnehmungen der Mehrzahl von Arretierungsausnehmungen eine Rotation der Rotorwelle zu blockieren. Der Arretierungsring kann als eine Einheit oder z.B. nacheinander oder paarweise an die Rotorwelle befestigt werden. Die Befestigung des Arretierungsrings an die Rotorwelle kann unabhängig von der Rotornabe erfolgen. Zum Beispiel kann der Arretierungsrings an die Rotorwelle ohne montierte Rotornabe erfolgen. Die Arretierungsvorrichtung kann an ein Rotorwellenlagergehäuse oder eine beliebige stationäre Komponente der Windenergieanlage montiert werden. Die Arretierungsvorrichtung kann derart z.B. in Richtung des Arretierungsrings montiert werden, dass ein Arretieren der Rotorwelle durch eine vorwiegend radiale Bewegung einer Arretierungsstruktur möglich ist.

Weitere Einzelheiten und optionale Aspekte des Verfahrens 800 sind in Verbindung mit dem vorgeschlagenen Konzept oder einem oder mehreren der zuvor oder im Folgenden beschriebenen Beispiele beschrieben.

Die Aspekte und Merkmale, die im Zusammenhang mit einem bestimmten der vorherigen Beispiele beschrieben sind, können auch mit einem oder mehreren der weiteren Beispiele kombiniert werden, um ein identisches oder ähnliches Merkmal dieses weiteren Beispiels zu ersetzen oder um das Merkmal in das weitere Beispiel zusätzlich einzuführen.

Es versteht sich ferner, dass die Offenbarung mehrerer, in der Beschreibung oder den Ansprüchen offenbarter Schritte, Prozesse, Operationen oder Funktionen nicht als zwingend in der beschriebenen Reihenfolge befindlich ausgelegt werden soll, sofern dies nicht im Einzelfall explizit angegeben oder aus technischen Gründen zwingend erforderlich ist. Daher wird durch die vorhergehende Beschreibung die Durchführung von mehreren Schritten oder Funktionen nicht auf eine bestimmte Reihenfolge begrenzt. Ferner kann bei weiteren Beispielen ein einzelner Schritt, eine einzelne Funktion, ein einzelner Prozess oder eine einzelne Operation mehrere Teilschritte, -funktionen, -prozesse oder -operationen einschließen und/oder in dieselben aufgebrochen werden.

Wenn einige Aspekte in den vorhergehenden Abschnitten im Zusammenhang mit einer Vorrichtung oder einem System beschrieben wurden, sind diese Aspekte auch als eine Beschreibung des entsprechenden Verfahrens zu verstehen. Dabei kann beispielsweise ein Block, eine Vorrichtung oder ein funktionaler Aspekt der Vorrichtung oder des Systems einem Merkmal, etwa einem Verfahrensschritt, des entsprechenden Verfahrens entsprechen. Entsprechend dazu sind Aspekte, die im Zusammenhang mit einem Verfahren beschrieben werden, auch als eine Beschreibung eines entsprechenden Blocks, eines entsprechenden Elements, einer Eigenschaft oder eines funktionalen Merkmals einer entsprechenden Vorrichtung oder eines entsprechenden Systems zu verstehen.

Die folgenden Ansprüche werden hiermit in die detaillierte Beschreibung aufgenommen, wobei jeder Anspruch als getrenntes Beispiel für sich stehen kann. Ferner ist zu beachten, dass - obwohl ein abhängiger Anspruch sich in den Ansprüchen auf eine bestimmte Kombination mit einem oder mehreren anderen Ansprüchen bezieht - andere Beispiele auch eine Kombination des abhängigen Anspruchs mit dem Gegenstand jedes anderen abhängigen oder unabhängigen Anspruchs umfassen können. Solche Kombinationen werden hiermit explizit vorgeschlagen, sofern nicht im Einzelfall angegeben ist, dass eine bestimmte Kombination nicht beabsichtigt ist. Ferner sollen auch Merkmale eines Anspruchs für jeden anderen unabhängigen Anspruch eingeschlossen sein, selbst wenn dieser Anspruch nicht direkt als abhängig von diesem anderen unabhängigen Anspruch definiert ist.

## Patentansprüche

1. Eine Vorrichtung (100) zum Arretieren einer Rotorwelle (101) einer Windenergieanlage, umfassend:
einen ein- oder mehrteiligen Arretierungsring (102), der an einer Rotorwelle (101) einer Windenergieanlage befestigt ist, wobei der Arretierungsring (102) eine Mehrzahl von Arretierungsausnehmungen (104) aufweist; und
eine Arretierungsvorrichtung (106), die ausgebildet ist, um durch eine vorwiegend radiale Bewegung einer Arretierungsstruktur (108) in eine der Arretierungsausnehmungen (104) der Mehrzahl von Arretierungsausnehmungen eine Rotation der Rotorwelle (101) zu blockieren, wobei die Arretierungsstruktur (108) in einer Führungsstruktur (218) geführt ist, wobei die Führungsstruktur (218) Teil eines Rotorwellenlagergehäuses (216) ist.

2. Die Vorrichtung (100) nach Anspruch 1, wobei
sich die Arretierungsausnehmungen (104) der Mehrzahl von Arretierungsausnehmungen radial durch den gesamten Arretierungsring (102) erstrecken oder sich bis zu einer Tiefe von maximal 90% einer radialen Dicke des Arretierungsrings in den Arretierungsring (102) erstrecken.

3. Die Vorrichtung (100) nach einem der vorhergehenden Ansprüche, wobei
sich die Arretierungsausnehmungen (104) der Mehrzahl von Arretierungsausnehmungen radial bis in eine Tiefe von zumindest 2 cm in den Arretierungsring (102) erstrecken.

4. Die Vorrichtung (100) nach einem der vorhergehenden Ansprüche, wobei
die Arretierungsausnehmungen (104) der Mehrzahl von Arretierungsausnehmungen über den Umfang des Arretierungsrings (102) verteilt sind.

5. Die Vorrichtung (100) nach einem der vorhergehenden Ansprüche, wobei
der Arretierungsring (102) einen L-förmigen oder T-förmigen Befestigungsflansch (214) aufweist, wobei der Arretierungsring (102) über den Befestigungsflansch (214) an der Rotorwelle (101) befestigt ist.

6. Die Vorrichtung (100) nach einem der vorhergehenden Ansprüche, wobei der Arretierungsring (102) eine radiale Dicke von zumindest 3cm aufweist.

7. Die Vorrichtung (100) nach einem der vorhergehenden Ansprüche, wobei
der Arretierungsring (102) eine Mehrzahl von Teilstücken (102a, 102b) aufweist.

8. Die Vorrichtung (100) nach Anspruch 7, wobei
jedes Teilstück (102a, 102b) zumindest eine Arretierungsausnehmung (104) der Mehrzahl von Arretierungsausnehmungen aufweist.

9. Die Vorrichtung (100) nach einem der vorhergehenden Ansprüche, wobei
die Arretierungsstruktur (108) ein Arretierungsbolzen ist.

10. Die Vorrichtung (100) nach Anspruch 9, wobei
der Arretierungsbolzen (108) einen Durchmesser von zumindest 10 cm aufweist.

11. Die Vorrichtung (100) nach einem der vorhergehenden Ansprüche, wobei
die Rotorwelle (101) zur Verbindung mit einer Rotornabe (210) einen minimalen Lochkreisdurchmesser von zumindest 1m aufweist.

12. Die Vorrichtung (100) nach einem der vorhergehenden Ansprüche, wobei
zumindest die Führungsstruktur (218), die Arretierungsvorrichtung (106) oder die Arretierungsstruktur (108) in eine Pratze des Rotorwellenlagergehäuses (216) integriert ist.

13. Windenergieanlage (730) aufweisend:
eine Vorrichtung (100) nach einem der vorhergehenden Ansprüche; und
eine Rotornabe (210), die mit der Rotorwelle (101) verbunden ist.

14. Windenergieanlage (730) aufweisend:
eine Vorrichtung (100) zum Arretieren einer Rotorwelle (101) einer Windenergieanlage, umfassend:
einen ein- oder mehrteiligen Arretierungsring (102), der an einer Rotorwelle (101) einer Windenergieanlage befestigt ist, wobei der Arretierungsring (102) eine Mehrzahl von Arretierungsausnehmungen (104) aufweist; und
maximal zwei Arretierungsvorrichtung (106), die ausgebildet sind, um durch eine vorwiegend radiale Bewegung von maximal zwei Arretierungsstrukturen (108) in maximal zwei der Arretierungsausnehmungen (104) der Mehrzahl von Arretierungsausnehmungen eine Rotation der Rotorwelle (101) zu blockieren; und
eine Rotornabe (210), die mit der Rotorwelle (101) verbunden ist.

15. Verfahren (800) zum Herstellen einer Windenergieanlage, umfassend:
Befestigen (810) eines ein- oder mehrteiligen Arretierungsrings an einer Rotorwelle einer Windenergieanlage, wobei der Arretierungsring eine Mehrzahl von Arretierungsausnehmungen aufweist; und
Montieren (820) einer Arretierungsvorrichtung, die ausgebildet ist, um durch eine vorwiegend radiale Bewegung einer Arretierungsstruktur in eine der Arretierungsausnehmungen der Mehrzahl von Arretierungsausnehmungen eine Rotation der Rotorwelle zu blockieren, wobei die Arretierungsstruktur in einer Führungsstruktur geführt ist, wobei die Führungsstruktur Teil eines Rotorwellenlagergehäuses ist.
